# FASCICULE DE BREVET EUROPEEN

(11) **EP 1 649 204 B1**
(45) Date de publication et mention de la délivrance du brevet: **10.03.2010**
(21) Numéro de dépôt: 04767837.0
(22) Date de dépôt: 14.06.2004
(51) Int. Cl.: F16L 55/40, F16L 55/36

(54) **DISPOSITIF D'EXPLORATION DE CANALISATIONS AVEC TETE CENTREE**
VORRICHTUNG ZUR UNTERSUCHUNG VON KANÄLEN MIT EINEM ZENTRIERTEN KOPF
DEVICE FOR EXAMINING DUCTS, COMPRISING A CENTRED HEAD

(30) Priorité: 16.06.2003 FR 0350219
(43) Date de publication de la demande: 26.04.2006
(73) Titulaire: COMMISSARIAT A L'ENERGIE ATOMIQUE, 75015 Paris (FR); AREVA NC, 75009 Paris (FR)
(72) Inventeur: SOULABAILLE, Yves, F-26700 Pierrelatte (FR); BRUN, Joël, F-07220 Saint-Thome (FR)
(74) Mandataire: Poulin, Gérard
(86) Numéro de dépôt international: PCT/FR2004/050275
(87) Numéro de publication internationale: WO 2004/113782

(56) Documents cités:
- DE-A- 4 426 939
- FR-A- 2 592 601
- FR-A- 2 768 214
- US-A- 5 996 159

## Description

### DOMAINE TECHNIQUE

Le domaine de l'invention est celui de l'exploration, l'inspection, la décontamination, la maintenance et la réparation interne des canalisations ou de gaines de ventilation, de climatisation ou autres.

### ART ANTERIEUR ET PROBLEMES POSES

Dans de nombreux domaines industriels, il s'avère indispensable de pouvoir visiter, explorer différentes sortes de canalisations, gaines et autres qui ne sont pas accessibles par un opérateur.

Il est connu d'utiliser des appareils plus ou moins robotisés, introduits à l'intérieur des canalisations et commandés de l'extérieur. On pense notamment au dispositif d'inspection du type "furet". La demande de brevet français 2 768 214 décrit un tel dispositif pour l'inspection de gaines de ventilation ou autre canalisation. Il comprend une tête mobile devant être introduite dans la gaine à explorer. Cette tête mobile peut comporter une caméra vidéo reliée à des moyens extérieurs de visualisation et/ou d'enregistrement des images de l'intérieur de la gaine. La tête mobile est également reliée par un tuyau flexible à une source extérieure d'air comprimé. De plus, elle comporte des moyens d'éjection de jets d'air dirigés vers les parois de la canalisation et en arrière, ce qui assure la sustentation et l'avancement de la tête mobile dans la canalisation.

Ce dispositif d'inspection ne permet pas de se centrer à l'intérieur des canalisations ou gaines visitées. De plus, ces caractéristiques ne lui permettent pas de se déplacer d'au moins 20 mètres à l'intérieur de telles canalisations qui comportent des parties horizontales et verticales, ainsi que des coudes et des jonctions.

Le but de l'invention est de remédier à ces inconvénients en proposant un dispositif d'exploration centré.

### RESUME DE L'INVENTION

Pour atteindre ce but, l'objet principal de l'invention est un dispositif d'exploration de canalisations selon la revendication 1.

Dans sa réalisation principale, le faisceau de baleines est centré par rapport à l'axe longitudinal de l'ensemble.

Dans une première réalisation, la tête mobile est fixée au milieu du faisceau de baleines.

Dans une deuxième réalisation, la tête mobile est fixée à une extrémité du faisceau de baleines.

Il est avantageux d'utiliser une canule lisse entre la tête mobile et le tuyau.

Le dispositif selon l'invention peut emporter, au niveau de la tête, une caméra, une brosse, un appareil de mesures radiologiques ou physico-chimiques, ou être complété d'un dispositif de projection par trou, tel qu'une buse.

Dans la forme préférentielle du faisceau de baleines selon l'invention, celui-ci présente une longueur L qui est de 1,5 à 2 fois supérieure à sa largeur.

De préférence, le faisceau de baleines est fixé par des bagues de fixation avant et arrière montées libres en rotation sur l'ensemble.

### LISTE DES FIGURES

L'invention, ses différentes réalisations et caractéristiques seront mieux comprises à la lecture de la description suivante, accompagnée de quelques figures représentant respectivement:
- figure 1, une première réalisation du dispositif selon l'invention ;
- figure 2, une deuxième réalisation du dispositif selon l'invention ; et
- figure 3, en coupe, la tête mobile du dispositif selon l'invention.

### DESCRIPTION DÉTAILLÉE DE PLUSIEURS RÉALISATIONS DE L'INVENTION

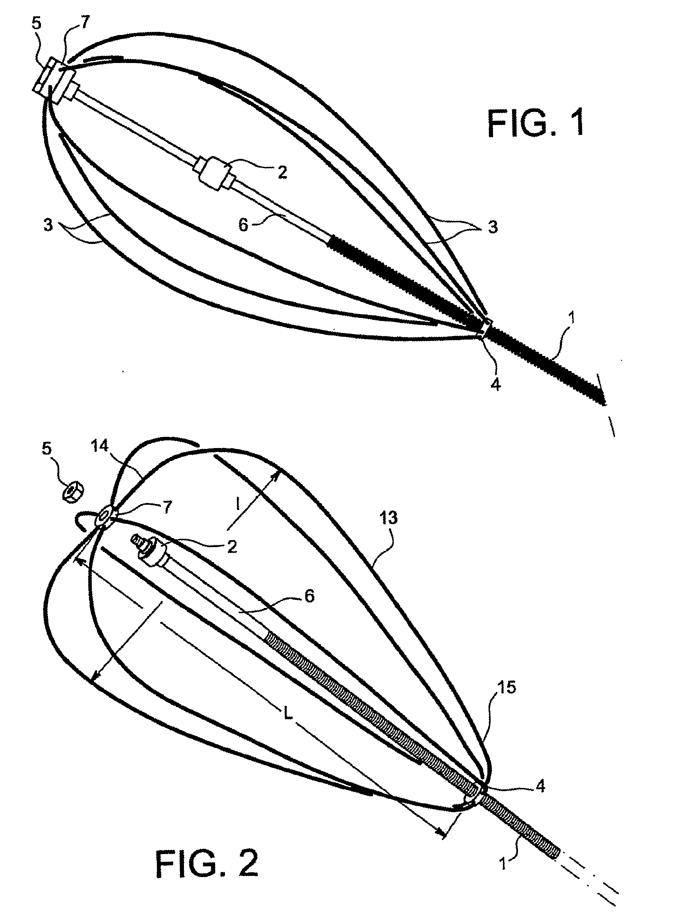

La figure 1 représente la partie principale du dispositif d'exploration selon l'invention, c'est-à-dire la partie relative au guidage et à la tête de propulsion de celui-ci. En effet, celui-ci comprend principalement un tuyau flexible 1 relié à des moyens extérieurs de commande et d'exploitation pilotés par un opérateur, hors de la canalisation à explorer. Ces moyens comprennent, entre autres, une source d'air comprimé.

Le tuyau flexible 1 est prolongé par une canule 6 sur laquelle est placée la tête mobile du dispositif. La présence de la canule 6 qui est lisse et qui a une longueur d'environ 15 cm, permet d'éviter les perturbations aérodynamiques dues à l'utilisation d'un tuyau flexible 1 annelé. Ceci contribue donc à l'amélioration des paramètres de poussée d'environ 10%.

Selon l'invention, on utilise un faisceau de baleines 3 en forme d'ogive. Une première extrémité des baleines 3 est fixée à une bague de fixation arrière 4 placée sur le tuyau flexible 1. La deuxième extrémité des baleines 3 est fixée sur une bague de fixation avant 7 fixée elle-même à l'extrémité de la canule 6.

Les deux bagues de fixation arrière 4 et avant 7 sont montées libres en rotation, afin d'assurer une maniabilité de l'ensemble. La forme de l'ogive peut être modifiée en éloignant ou rapprochant les deux bagues de fixation arrière 4 et avant 7 de manière à ce que la distance L séparant les deux bagues de fixation arrière 4 et avant 7 soit 1,5 à 2 fois plus importante que la largeur 1 du diamètre formé par le faisceau de baleines 3. L égale 1,5 à 2 fois x 1.

Dans cette première réalisation décrite par la figure 1, la tête mobile 2 est placée dans la région centrale du faisceau formée par les baleines 3. Le diamètre extérieur du faisceau de baleines 3 est légèrement inférieur à celui de la gaine ou de la canalisation à explorer ou à traiter.

La figure 2 montre une deuxième forme de l'ogive formée par le faisceau de baleines 13. En effet, celles-ci ont une partie avant 14 beaucoup plus courbée que leur partie arrière 15. Ainsi, le diamètre maximal du faisceau se trouve vers l'avant de celui-ci, dans le but de pouvoir loger la tête mobile 2 également vers l'avant de ce faisceau, sur la canule 6.

On comprend que, dans les deux réalisations représentées par les figures 1 et 2, la tête mobile 2 est globalement centrée au milieu de la canalisation ou de la gaine à explorer.

Les applications sont très diverses et variées. En effet, il est possible de procéder au nettoyage ou à la décontamination de gaines de ventilation ou d'effectuer des mesures radiologiques ou physico-chimiques de ces gaines. Notamment, il est possible de procéder à la projection de gels thixotropiques ou de mousses à l'intérieur de gaines de ventilation.

Dans ces deux premiers cas, le dispositif d'exploration est introduit à l'intérieur de la canalisation à traiter et la tête mobile est amenée au point le plus éloigné grâce à la poussée obtenue par air comprimé. Les trous d'éjection de la tête mobile 2 sont dirigés vers l'arrière de l'ensemble, de sorte que la poussée produite entraîne un mouvement d'ensemble vers l'avant.

La projection de gel ou de mousse est effectuée sur le trajet de retour du dispositif d'exploration, en tirant sur le tuyau flexible, l'alimentation en air comprimé étant coupée. Cette mise en oeuvre permet d'avoir un poids d'ensemble très faible sur le trajet aller, le tube d'alimentation en gel ou en mousse étant vide. Ainsi, le poids du dispositif n'est pas pénalisé par le poids de la matière à projeter, lors du trajet aller de l'ensemble.

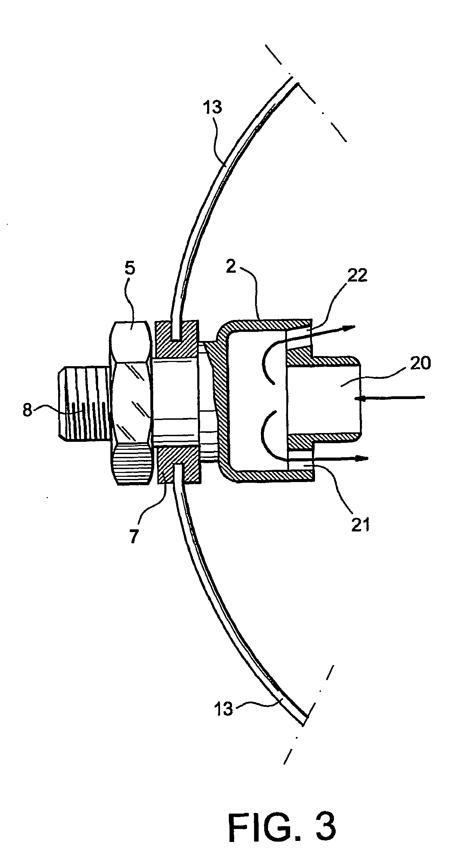

La figure 3 représente, en coupe, la tête mobile 2 du dispositif selon l'invention et son montage, à l'extrémité de celui-ci. On distingue sur cette figure 3, la tête mobile 2, la bague de fixation avant 7 fixée par un écrou 5 sur une tige de fixation filetée 8 solidaire, de façon coaxiale, à la tête mobile 2. Ainsi, cette dernière est placée à l'avant du faisceau de baleines 13.

La propulsion et l'orientation du dispositif sont obtenues au moyen d'au moins deux trous de propulsion 21 et 22, dirigés vers l'arrière, l'air comprimé arrivant par un trou central 20 en communication avec l'intérieur de la canule 6 et du tuyau flexible 1 représenté sur les figures 1 et 2. Si le premier trou 21 a une orientation parallèle à l'axe de l'ensemble, le deuxième trou est incliné légèrement vers l'extérieur, de préférence de 10° par rapport à l'axe longitudinal de l'ensemble. Ce désaxage permet, par rotation de la tête mobile 2, de diriger cette dernière dans la canalisation.

Grâce à la canule 6 qui est lisse, la diminution des frottements le long de la canalisation ou de la gaine à explorer due à la présence d'un simple faisceau de baleines permet de compenser l'utilisation éventuelle d'un tuyau flexible 1 en acier inoxydable. Ceci est notamment efficace lorsqu'il y a de nombreux coudes dans la canalisation ou la gaine à visiter. Un tel acier inoxydable permet d'utiliser le dispositif selon l'invention dans un milieu chimique qui pourrait être nocif pour d'autres dispositifs d'exploration en matériau plastique.

Enfin, la tête mobile 2 et la canule 6 se trouvant centrées à l'aide du faisceau de baleines, les appareils de traitement (projection de gel ou de mousse), d'exploration (caméra) ou de mesures radiologiques ou physico-chimiques se trouvent également centrés au milieu de la canalisation de la gaine dans laquelle le dispositif est introduit.

## Revendications

1. Dispositif d'exploration de canalisations comportant une tête mobile (2) et un tuyau flexible (1), la tête mobile (2) étant reliable à des moyens extérieurs de commande et d'exploitation et à une source de gaz comprimé par le tuyau flexible (1) auquel celle-ci est fixée, la tête mobile (2) comportant au moins un orifice d'éjection (21, 22) de gaz comprimé orienté vers le tuyau flexible (1) pour sa propulsion,
**caractérisé en ce qu'**il comprend un faisceau de baleines (3, 13) autour de la tête mobile (2), écartées les unes des autres pour définir un volume dont le périmètre maximal, dans l'axe longitudinal de l'ensemble, est d'une valeur déterminée.

2. Dispositif d'exploration selon la revendication 1, **caractérisé en ce que** le faisceau de baleines (3, 13) est centré par rapport à l'axe longitudinal de l'ensemble.

3. Dispositif d'exploration selon la revendication 1, **caractérisé en ce que** la tête mobile (2) est fixée au milieu du faisceau de baleines (3).

4. Dispositif d'exploration selon la revendication 1, **caractérisé en ce que** la tête mobile (2) est fixée à une extrémité avant du faisceau de baleines (13), ces dernières ayant une partie avant (14) plus large que la partie arrière (15).

5. Dispositif d'exploration selon la revendication 1, **caractérisé en ce qu'**il comprend une canule (6) lisse placée entre la tête mobile (2) et le tuyau flexible (1) qui est annelé.

6. Dispositif d'exploration selon la revendication 1, **caractérisé en ce qu'**il comprend une caméra à l'intérieur du faisceau.

7. Dispositif d'exploration selon la revendication 1, **caractérisé en ce que** la tête mobile (2) comprend deux orifices d'éjection, un premier orifice (21) orienté parallèlement à l'axe longitudinal de l'ensemble et un deuxième orifice (22) incliné vers l'extérieur par rapport à l'axe longitudinal.

8. Dispositif d'exploration selon la revendication 1, **caractérisé en ce que** la longueur L du faisceau de baleines (3, 13) est égale à 1,5 à 2 fois le diamètre 1 du faisceau.

9. Dispositif d'exploration selon la revendication 1, **caractérisé en ce que** le faisceau de baleines (3, 13) est monté au moyen de deux bagues de fixation arrière (4) et avant (7) montées libres en rotation sur l'ensemble.

## Claims

1. Device for exploration of pipes comprising a mobile head (2) and a flexible pipe (1), the mobile head (2) being connectable to external control and operating means and a compressed gas source through the flexible pipe (1) to which the mobile head (2) is fixed, the head comprising at least one compressed gas ejection orifice (21, 22) for propulsion, oriented towards the flexible pipe (1).
**characterised in that** it comprises a bundle of ribs (3, 13) placed around the mobile head (2), which spread out from the other to define a volume for which the maximum perimeter around the longitudinal axis of the assembly is equal to a determined value slightly less than the diameter of the pipe or the duct to be explored.

2. Device for exploration according to claim 1, **characterised in that** the bundle of ribs (3, 13) is centred about the longitudinal axis of the assembly.

3. Device for exploration according to claim 1, **characterised in that** the mobile head (2) is fixed at the middle of the bundle of ribs (3).

4. Device for exploration according to claim 1, **characterised in that** the mobile head (2) is fixed at one front end of the bundle of ribs (13), these ribs being wider on the front part (14) than the rear part (15).

5. Device for exploration according to claim 1, **characterised in that** it comprises a smooth canula (6) placed between the mobile head (2) and the splined flexible pipe (1).

6. Device for exploration according to claim 1, **characterised in that** it comprises a camera inside the bundle.

7. Device for exploration according to claim 1, **characterised in that** the mobile head (2) comprises two ejection orifices, a first orifice (21) parallel to the longitudinal axis of the assembly and a second orifice (22) inclined outwards from the longitudinal axis.

8. Device for exploration according to claim 1, **characterised in that** the length L of the bundle of ribs (3, 13) is equal to 1.5 to 2 times the bundle diameter 1.

9. Device for exploration according to claim 1, **characterised in that** the bundle of ribs (3, 13) is installed by means of one rear attachment ring (4) and one front attachment ring (7), installed free to rotate about the assembly.

## Patentansprüche

1. Vorrichtung zur Untersuchung von Kanälen, mit einem beweglichen Kopf (2) und einem flexiblen Rohr (1), wobei der bewegliche Kopf (2) verbunden werden kann mit äußeren Steuer- und Betriebseinrichtungen und mit einer Druckgasquelle, durch ein flexibles Rohr (1), an dem diese befestigt ist, und der bewegliche Kopf (2) für seinen Antrieb wenigstens eine in Richtung flexibles Rohr (1) gerichtete Druckgasdüse (21, 22) umfasst,
**dadurch gekennzeichnet, dass** sie um den beweglichen Kopf (2) herum ein Bündel von Stäbchen (3, 13) umfasst, so von einander beabstandet, dass sie ein Volumen definieren, dessen größter Umfang - in der Längsachse des Ganzen - einen bestimmten Wert aufweist.

2. Untersuchungsvorrichtung nach Anspruch 1, **dadurch gekennzeichnet, dass** das Stäbchenbündel (3, 13) in Bezug auf die Längsachse des Ganzen zentriert ist.

3. Untersuchungsvorrichtung nach Anspruch 1, **dadurch gekennzeichnet, dass** der bewegliche Kopf (2) in der Mitte des Stäbchenbündels (3) befestigt ist.

4. Untersuchungsvorrichtung nach Anspruch 1, **dadurch gekennzeichnet, dass** der bewegliche Kopf (2) an einem vorderen Ende des Bündels von Stäbchen (13) befestigt ist, wobei diese Letzteren einen vorderen Teil (14) haben, der größer ist als der hintere Teil (15).

5. Untersuchungsvorrichtung nach Anspruch 1, **dadurch gekennzeichnet, dass** sie eine glatte Kanüle (6) umfasst, die sich zwischen dem beweglichen Kopf (2) und dem flexiblen Rohr (1) befindet, das ringförmig ist.

6. Untersuchungsvorrichtung nach Anspruch 1, **dadurch gekennzeichnet, dass** sie im Innern des Bündels eine Kamera umfasst.

7. Untersuchungsvorrichtung nach Anspruch 1, **dadurch gekennzeichnet, dass** der bewegliche Kopf (2) zwei Druckgasdüsen umfasst, eine parallel zu der Längsachse des Ganzen ausgerichtete erste Düse (21) und eine in Bezug auf die Längsachse schräg nach außen gerichtete zweite Düse (22).

8. Untersuchungsvorrichtung nach Anspruch 1, **dadurch gekennzeichnet, dass** die Länge L des Stäbchenbündels (3, 13) gleich 1,5- bis 2-mal größer ist als der Durchmesser l des Bündels.

9. Untersuchungsvorrichtung nach Anspruch 1, **dadurch gekennzeichnet, dass** das Stäbchenbündel (3, 13) mit Hilfe von zwei frei drehbar montierten Befestigungsringen, hinten (4) und vorn (7), mit dem Ganzen zusammengebaut ist.
